# FASCICULE DE BREVET EUROPEEN

(11) **EP 3 820 341 B1**
(45) Date de publication et mention de la délivrance du brevet: **07.06.2023**
(21) Numéro de dépôt: 19734797.4
(22) Date de dépôt: 01.07.2019
(51) Int. Cl.: A47J 43/046

(54) **APPAREIL DE PREPARATION CULINAIRE COMPRENANT UNE CUVE ET UN ORGANE DE TRAVAIL**
KÜCHENGERÄT MIT EINER SCHALE UND EINEM ARBEITSELEMENT
CULINARY PREPARATION APPLIANCE COMPRISING A BOWL AND A WORKING MEMBER

(30) Priorité: 11.07.2018 FR 1856365
(43) Date de publication de la demande: 19.05.2021
(73) Titulaire: SEB S.A., 69130 Ecully (FR)
(72) Inventeur: DECROZE, Nicolas, 74000 ANNECY (FR); CUBIZOLLES, Serge, 38780 OYTIER SAINT OBLAS (FR)
(74) Mandataire: SEB Développement
(86) Numéro de dépôt international: PCT/EP2019/067518
(87) Numéro de publication internationale: WO 2020/011574

(56) Documents cités:
- WO-A1-2015/143268
- WO-A1-2017/085073
- WO-A1-2017/211969
- CN-A- 106 983 354

## Description

### Domaine de l'invention

La présente invention concerne un appareil de préparation culinaire comprenant une cuve et un organe de travail.

### Art antérieur

Il est connu de disposer d'un appareil de préparation culinaire comprenant une cuve dans laquelle sont disposés des ingrédients à cuisiner. L'appareil de préparation culinaire comprend également un organe de travail qui est mobile relativement à la cuve pour, par exemple, mélanger les ingrédients ou les couper.

Il est également connu de disposer pour un même appareil de préparation culinaire de plusieurs organes de travail amovibles ayant différentes fonctions.

Lors de la réalisation d'une recette de cuisine, l'appareil de préparation culinaire est configuré pour guider l'utilisateur durant chaque étape. De son côté, l'utilisateur doit monter l'organe de travail correspondant à l'étape à réaliser et enclencher le démarrage de l'étape.

Par ailleurs certaines étapes de la recette de cuisine sont considérées terminées lorsqu'un capteur mesure une grandeur physique destinée être atteinte. Il peut s'agir par exemple d'atteindre une température prédéterminée pour qu'une étape de préchauffage soit considérée comme terminée.

La mesure de grandeurs physiques permet la réalisation de la recette de cuisine. Toutefois la mesure de ces grandeurs physiques ne permet pas de s'assurer qu'un mélange d'ingrédients est homogène. En ce sens, une grandeur physique locale mesurée pourrait induire en erreur l'appareil de préparation culinaire sur l'état réel du mélange d'ingrédients.

A titre d'exemple un capteur de température inclus dans la cuve rend compte de la température en périphérie de la paroi de la cuve et non au centre de la cuve. L'appareil de préparation culinaire pourrait ainsi considérer qu'une étape est terminée alors qu'il serait nécessaire de la poursuivre. Le document WO 2017/085073 divulgue un capteur de température disposé de manière fixe sous le fond du récipient.

La présente invention vise à résoudre tout ou partie des inconvénients mentionnés ci-dessus.

### Exposé de l'invention

A cet effet, la présente invention concerne un appareil de préparation culinaire comprenant :
- un boîtier,
- une cuve configurée pour coopérer avec le boîtier et agencée pour recevoir des aliments à préparer,
- un organe de travail configuré pour coopérer avec la cuve et agencé pour travailler les aliments reçus dans la cuve,
- des moyens d'actionnement disposés dans le boîtier et agencés pour mettre en mouvement l'organe de travail relativement à la cuve ou pour mettre en mouvement la cuve relativement à l'organe de travail,
- des moyens de chauffage agencés pour chauffer les aliments reçus dans la cuve,
- une unité de contrôle dotée d'un processeur, l'unité de contrôle étant configurée pour commander le fonctionnement des moyens d'actionnement et des moyens de chauffage,
- un dispositif d'acquisition d'au moins une grandeur physique compris dans l'organe de travail ou dans la cuve, le dispositif d'acquisition étant compris dans l'organe de travail lorsque l'organe de travail est mobile et la cuve est fixe relativement au boitier, le dispositif d'acquisition étant compris dans la cuve lorsque la cuve est mobile et l'organe de travail est fixe relativement au boitier, le dispositif d'acquisition étant configuré pour échanger des informations avec un module de communication de l'unité de contrôle.

Cette disposition permet de mesurer l'au moins une grandeur physique au coeur de la matière, c'est-à-dire des aliments reçus dans la cuve, à différents endroits en se déplaçant. Par exemple, dans des produits visqueux et/ou hétérogènes comme la soupe, il peut exister une grande différence de température à quelques centimètres près.

Il est ainsi possible de déterminer le moment où l'au moins une grandeur physique devient homogène dans la cuve. La vitesse de rotation de l'organe de travail peut ainsi être régulée en fonction d'informations mesurés par le dispositif d'acquisition.

Cette disposition permet également d'informer l'utilisateur du manque d'un aliment ou ingrédient comme la farine, le sel, l'huile ou l'eau selon la nature de la grandeur physique et les valeurs mesurées de l'au moins une grandeur physique.

Selon un aspect de l'invention, l'au moins une grandeur physique comprend une pression, une température, une salinité, une viscosité, une vitesse de rotation de l'organe de travail ou une hauteur de produit apte à être mesurée par un capteur infrarouge.

Selon un aspect de l'invention, l'au moins une grandeur physique correspond à la détection d'un phénomène de cavitation dans la cuve.

Ces mesures permettent le réglage de paramètres de cuisson et/ou de travail en temps réel tel que la puissance de chauffe ou la vitesse de rotation de l'organe de travail ou de la cuve en fonction d'informations mesurées et/ou d'une durée de cuisson.

Ces mesures permettent également d'informer l'utilisateur du manque d'un ingrédient comme la farine, le sel, l'huile ou l'eau.

Selon un aspect de l'invention, le dispositif d'acquisition est intrégré dans l'organe de travail ou la cuve par surmoulage. De préférence le dispositif d'acquisition constitue un insert surmoulé dans l'organe de travail ou dans la cuve.

Cette disposition permet de protéger le dispositif d'acquisition du milieu extérieur c'est-à-dire des aliments reçus dans la cuve. Le dispositif d'accquisition est ainsi au plus près des aliments ce qui permet une détermination précise de la grandeur physique.

Cette disposition permet également le passage au lave-vaisselle de l'organe de travail et/ou de la cuve comprenant le dispositif d'acquisition.

Selon un aspect de l'invention, le dispositif d'acquisition comprend un élément magnétique permanent présentant une configuration magnétique apte à être reconnue par un détecteur de l'appareil de préparation culinaire, l'unité de contrôle étant apte à échanger des informations avec ledit détecteur.

De préférence, ledit détecteur est compris dans la cuve fixe ou dans le boîtier. En particulier, l'élément magnétique permanent comprend au moins un aimant. Selon un aspect de l'invention, l'élément magnétique permanent comprend au moins un pôle nord et au moins un pôle sud et de préférence une pluralité de pôles nord et une pluralité de pôles sud.

L'élément magnétique permanent présente ainsi une signature magnétique bien particulière permettant la reconnaissance de l'organe de travail utilisé par l'unité de contrôle.

En d'autres termes, les aimants définissent un dispositif d'identification de l'organe de travail ou de la cuve. L'identification n'est pas forcément réalisée en même temps que la mesure de l'au moins une grandeur physique.

Selon un aspect de l'invention, le dispositif d'acquisition comprend un module de transfert configuré pour recevoir de l'énergie selon un mode de transfert sans fil par couplage électromagnétique avec un système de transmission intermédiaire de l'appareil de préparation culinaire.

Cette disposition permet de limiter la taille du dispositif d'acquisition puisqu'il ne comprend pas de batterie interne ou de dispositif de raccordement à une alimentation de l'appareil de préparation culinaire.

Par ailleurs, aucune maintenance n'est nécessaire au niveau de l'organe de travail puisqu'il s'agit d'un composant « passif » peu susceptible d'être défectueux.

Selon un aspect de l'invention, le système de transmission intermédiaire est compris dans la cuve, dans un couvercle de l'appareil de préparation culinaire apte à coopérer avec la cuve fixe, dans le boîtier ou dans l'organe de travail fixe, le système de transmission intermédiaire comprenant un module de communication complémentaire agencé pour échanger des informations selon un protocole de communication sans fil avec le module de communication de l'unité de contrôle et/ou avec un module annexe de communication et/ou avec un réseau étendu.

Cette disposition permet de communiquer facilement avec le dispositif d'acquisition puique le système de transmission intermédiaire est toujours proche de l'organe de travail ou de la cuve.

Il est également possible de transférer à plus grande distance des informations provenant du dispositif d'acquisition vers l'unité de contrôle de l'appareil de préparation culinaire et/ou vers le module annexe de communication et/ou un réseau.

Selon un aspect de l'invention, le module annexe de communication est compris dans un terminal portable. Selon un aspect de l'invention, le réseau étendu est de type réseau local sans fil ou un réseau de téléphonie sans fil.

Selon un aspect de l'invention, la cuve et le couvercle sont configurés pour coopérer en une position ouverte et en une position fermée. De préférence, en position fermée le couvercle et la cuve engendrent un espace interne étanche par rapport à l'extérieur.

Selon un aspect de l'invention, le système de transmission intermédiaire comprend une batterie, la batterie étant apte à être rechargée en énergie par un système d'alimentation du boitier, lorsque la cuve ou l'organe de travail coopère avec le boitier et que le système de transmission intermédiaire est compris dans la cuve fixe ou l'organe de travail fixe.

Il est ainsi possible de disposer d'une source d'énergie rechargeable par une utilisation normale de l'appareil culinaire, c'est-à-dire lorsque la cuve ou l'organe de travail coopère avec le boîtier.

Cette disposition permet au système de transmission intermédiaire de fonctionner même lorsque la cuve ou l'organe de travail ne coopère pas avec le boîtier.

Selon un aspect de l'invention, le système de transmission intermédiaire est en outre agencé pour être alimenté directement en énergie par le système d'alimentation du boîtier lorsque la cuve ou l'organe de travail coopère avec le boîtier.

Selon un aspect de l'invention, le dispositif d'acquisition comprend une étiquette RFID raccordée au module de transfert.

Cette disposition permet également de faire les mesures sans contact et d'identifier le dispositif d'acquisition puisque l'étiquette RFID permet une communication bidirectionnelle.

Il est ainsi possible de s'assurer que l'organe de travail utilisé est celui correspondant à l'étape de fonctionnement réalisée par l'appareil de préparation culinaire.

Selon un aspect de l'invention, le dispositif d'acquisition comprend au moins un capteur agencé pour mesurer l'au moins une grandeur physique, l'au moins un capteur étant raccordé à l'étiquette RFID.

L'organe de travail est ainsi compact puisque le dispositif d'acquisition ne nécessite pas beaucoup de place.

Selon un aspect de l'invention, le module de transfert comprend une antenne.

Selon un aspect de l'invention, l'au moins un capteur comprend un capteur de température. De préférence, le capteur de température comprend une thermistance CTN ou à coefficient de température négatif.

Selon un aspect de l'invention, l'étiquette RFID comprend en mémoire un identifiant relatif à l'organe de travail.

Cette disposition permet de s'assurer que l'organe de travail utilisé est compatible avec l'appareil de préparation culinaire, la recette sélectionnée et également qu'il s'agit de l'organe de travail adéquat pour la tâche à réaliser, comme un hachoir ou un malaxeur.

Selon un aspect de l'invention, le système de transmission intermédiaire comprend un module de transfert complémentaire agencé pour transmettre de l'énergie et échanger des informations avec le module de transfert du dispositif d'acquisition, le module de transfert complémentaire comprenant en outre un microcontrôleur et un lecteur agencé pour convertir les informations échangées avec le dispositif d'acquisition en données interprétables par le microcontrôleur.

Cette disposition permet d'interpréter, de sélectionner et/ou de modifier les informations communiquées à destination de l'unité de contrôle et/ou du terminal portable et/ou du réseau étendu.

Selon un aspect de l'invention, le système de transmission intermédiaire comprend au moins un capteur additionnel, l'au moins un capteur additionnel étant disposé sur ou ménagé dans la cuve fixe, le couvercle, le boîtier ou l'organe de travail fixe.

Cette disposition permet de réaliser d'autres mesures de grandeurs physiques et ainsi de disposer d'informations complémentaires sur l'état des aliments dans la cuve ou l'état de fonctionnement de l'appareil culinaire.

Selon un aspect de l'invention, l'au moins un capteur additionnel comprend un capteur de poids ménagé sous la cuve fixe. Ainsi même si la cuve ne coopère pas avec le boitier, il est possible de connaître les poids des aliments reçus dans la cuve.

La mesure de poids intégrée à la cuve permet de contrôler les quantités incorporées par l'utilisateur par guidage pas à pas lors de la préparation de la recette. Ceci garantit un résultat de cuisson conforme à la recette mise en oeuvre.

Cette disposition permet également un ajustement des paramètres de cuisson en fonction des quantités incorporées si celles-ci sont différentes de celles de la recette.

Selon un aspect de l'invention, l'au moins un capteur additionnel comprend un capteur de pression configuré pour mesurer une pression interne à la cuve.

Selon un aspect de l'invention, l'appareil de préparation culinaire est un appareil de cuisson sous pression, le couvercle étant agencé pour être disposé en une position fermée de mise sous pression.

Selon un aspect de l'invention, l'au moins un capteur additionnel comprend un capteur de température configuré pour mesurer une température. Il est par exemple possible de mesurer une différence de température entre les aliments dans la cuve et le couvercle.

Selon un aspect de l'invention, l'au moins un capteur additionnel comprend un capteur de présence du couvercle configuré pour déterminer si le couvercle est en une position fermée ou non. De préférence le capteur de présence est configuré pour déterminer si le couvercle fermé est verrouillé ou déverrouillé, le verrouillage interdisant l'ouverture.

Selon un aspect de l'invention, la cuve et/ou le couvercle, est pourvue d'un distributeur d'ingrédients ou d'aliments agencé pour ajouter au moins un ingrédient addditionnel dans la cuve, l'unité de contrôle étant configurée pour commander le fonctionnement du distributeur.

De préférence, l'au moins un ingrédient additionnel comprend du sel, de l'huile, de l'eau, de la farine et/ou des épices. Cette disposition permet d'automatiser une partie de la recettes.

Selon un aspect de l'invention, l'unité de contrôle est configurée pour commander le fonctionnement du distributeur en fonction de l'au moins une grandeur physique mesurée par le dispositif d'acquisition et/ou d'au moins une valeur mesurée par l'au moins un capteur additionnel de la cuve.

Il est également possible d'ajuster la quantité de l'au moins un ingrédient additionnel selon l'au moins une grandeur physique mesurée par le dispositif d'acquisition.

Selon un aspect de l'invention, le module de transfert et le module de transfert complémentaire sont configurés pour crypter et pour décrypter les informations échangées, les informations échangées étant cryptées.

Cette disposition permet de limiter les instrutions malveillantes dans la communication entre la cuve et le dispositif d'acquisition. Le but est d'éviter les pi ratages.

Selon un aspect de l'invention, l'appareil de préparation culinaire comprend un système d'éclairage de la cuve configuré pour éclairer les aliments reçus dans la cuve.

Cette disposition permet de mettre en valeur du résultat de la recette une fois celle-ci terminée. Cette disposition permet également à l'utilisateur de contrôler le déroulement de la recette.

Selon un aspect de l'invention, le système d'éclairage est rapporté sur ou ménagé dans la cuve. De préférence, le système d'éclairage est rapporté sur ou ménagé dans le couvercle.

Selon un aspect de l'invention, le système d'éclairage comprend au moins une diode électroluminescente et/ou un guide de lumière.

Selon un aspect de l'invention, le système d'éclairage comprend un dispositif de modulation de l'intensité lumineuse et/ou de la couleur de la lumière.

Cette disposition permet d'indiquer à l'utilisateur l'avancement d'une phase de fonctionnement, par exemple l'état d'une cuisson en passant progressivement d'une couleur verte à une couleur rouge ou en intensifiant progressivement l'éclairage.

La présente invention concerne également un procédé de commande d'un appareil de préparation culinaire tel que décrit ci-avant, comprenant :
- une étape d'acquisition d'au moins une valeur mesurée de l'au moins une grandeur physique par le dispositif d'acquisition,
- une étape de traitement de l'au moins une valeur mesurée par l'unité de contrôle, le traitement correspondant à la comparaison de l'au moins une valeur mesurée à au moins une valeur cible connue de l'unité de contrôle et la détermination d'un avancement d'accomplissement d'une séquence de fonctionnement de l'appareil de préparation culinaire,
- une étape d'adaptation de la séquence de fonctionnement en fonction de l'avancement d'accomplissement.

Cette disposition permet, grâce à l'au moins une valeur mesurée, de déterminer précisément la progression de la séquence de fonctionnement en cours.

De préférence, l'adaptation de la séquence de fonctionnement correspond à un allongement ou un raccourcissement de la durée par défaut de la séquence de fonctionnement, à une augmentation ou une diminution d'une température de cuisson ou l'adaptation d'une vitesse de rotation de l'organe de travail ou de la cuve.

Selon un aspect de l'invention, au moins une valeur mesurée additionnelle provenant de l'au moins un capteur additionnel est prise en compte lors de l'étape de traitement.

Cette disposition permet de déterminer au mieux l'état du ou des aliments présents dans la cuve lors de la séquence de fonctionnement de l'appareil de préparation culinaire.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- la figure 1 est une vue en perspective d'un appareil de préparation culinaire et d'un terminal portable ;
- la figure 2 est une vue éclatée d'une cuve et d'un couvercle de l'appareil de préparation culinaire ;
- la figure 3 est une vue schématique résumant l'échange d'informations dans l'appareil de préparation culinaire ;
- la figure 4 détaille les étapes d'un procédé de commande de l'appareil de préparation culinaire.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

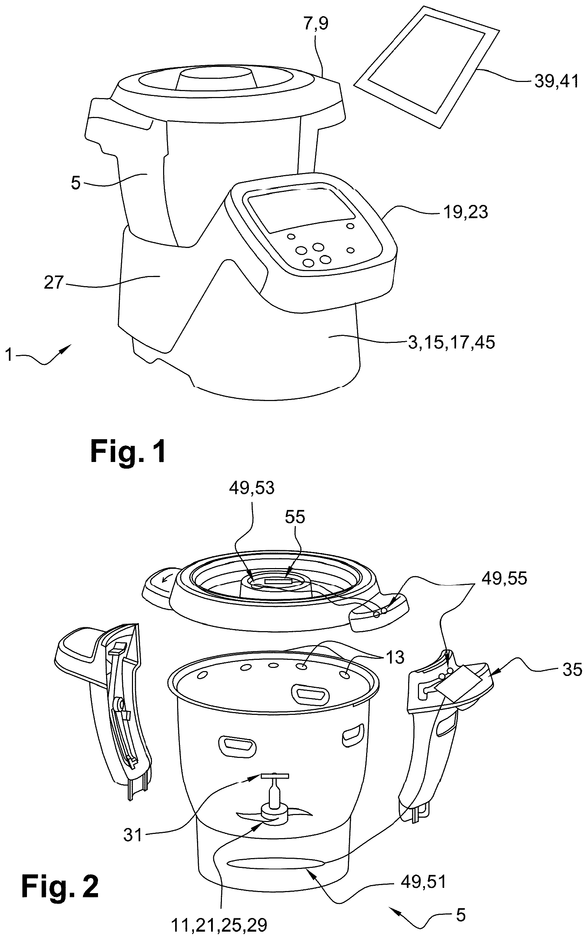

Comme illustré à la figure 1, un appareil de préparation culinaire 1 comprend un boîtier 3 et une cuve 5 configurée pour coopérer avec le boîtier 3. Dans le mode de réalisation présenté, l'appareil de préparation culinaire 1 est un appareil de cuisson sous pression.

La cuve 5 est agencée pour recevoir des aliments à préparer. Il peut s'agir par exemple d'ingrédients d'une recette de cuisine mise en oeuvre par l'appareil de préparation culinaire 1.

L'appareil de préparation culinaire 1 comprend également un couvercle 7 configuré pour coopérer avec la cuve 5 et mobile entre une position ouverte et une position fermée dans laquelle la cuve 5 est étanche par rapport au milieu extérieur. La position fermée est ainsi une position de mise sous pression de la cuve 5.

Le couvercle 7 peut comprendre un distributeur d'ingrédients 9 contrôlé par l'appareil de préparation culinaire 1 de manière à verser dans la cuve 5 au moins un ingrédient additionnel au cours de la réalisation de la recette.

Cet au moins un ingrédient additionnel peut être du sel, de l'huile, de l'eau, de la farine ou des épices.

Comme illustré à la figure 2, l'appareil de préparation culinaire 1 comprend un organe de travail 11 configuré pour coopérer avec la cuve 5 et agencé pour travailler les aliments ou ingrédients reçus dans la cuve 5. Cet organe de travail 11 est amovible et plusieurs organes de travail 11 peuvent être prévus pour coopérer avec un même appareil de préparation culinaire 1.

L'appareil de préparation culinaire 1 peut comprendre un système d'éclairage 13 de la cuve 5 configuré pour éclairer l'intérieur de la cuve 5 de manière à ce que l'utilisateur distingue clairement les ingrédients compris dans la cuve 5.

Le système d'éclairage 13 est rapporté sur ou ménagé dans la cuve 5 et/ou le couvercle 7. Le système d'éclairage 13 comprend au moins une diode électroluminescente et un dispositif de modulation de l'intensité lumineuse et/ou de la couleur de la lumière.

L'appareil de préparation culinaire 1 comprend des moyens d'actionnement 15 disposés dans le boîtier 3 et agencés pour mettre en mouvement l'organe de travail 11. Il s'agit par exemple d'un moteur d'agitation. L'appareil de préparation culinaire 1 comprend en outre des moyens de chauffage 17 agencés pour chauffer les aliments ou ingrédients reçus dans la cuve 5. Il s'agit par exemple d'une résistance chauffante.

L'appareil de préparation culinaire 1 comprend une unité de contrôle 19 dotée d'un processeur configurée pour commander le fonctionnement des moyens d'actionnement 15 et des moyens de chauffage 17.

L'appareil de préparation culinaire 1 comprend un dispositif d'acquisition 21 d'au moins une grandeur physique. L'au moins une grandeur physique peut être une pression, une température, une salinité, une viscosité, une vitesse de rotation de l'organe de travail 11, une hauteur d'un produit contenu dans la cuve 5, etc.

Le dispositif d'acquisition 21 est compris dans l'organe de travail 11. Le dispositif d'acquisition 21 est intégré par surmoulage dans l'organe de travail et constitue ainsi un insert surmoulé.

Le dispositif d'acquisition 21 est configuré pour échanger des informations avec un module de communication 23 de l'unité de contrôle 19.

Le dispositif d'acquisition 21 comprend également un élément magnétique permanent 25 présentant une configuration spatiale magnétique apte à être reconnue par un détecteur 27 de l'appareil de préparation culinaire 1. Le détecteur 27 est compris dans la cuve 5 ou le boîtier 3.

L'élément magnétique permanent 25 comprend au moins un aimant présentant au moins un pôle nord ou un pôle sud. Cette disposition permet de reconnaître l'organe de travail 21 monté même lorsque l'appareil de préparation culinaire 1 n'est pas en fonctionnement.

Le dispositif d'acquisition 21 comprend au moins un capteur 29 qui est dans le mode de réalisation présenté un capteur de température comme une thermistance CTN ou à coefficient de température négatif. Le dispositif d'acquisition 21 comprend une étiquette RFID 31 avec en mémoire un identifiant relatif à l'organe de travail 21.

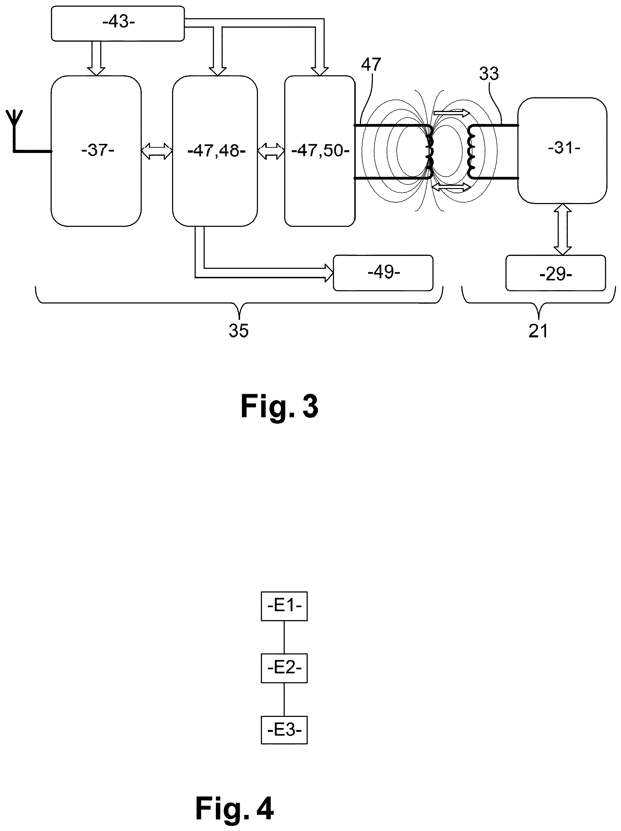

Comme illustré à la figure 3, le dispositif d'acquisition 21 comprend en outre un module de transfert 33 comme par exemple une antenne. Le module de transfert 33 est configuré pour recevoir de l'énergie selon un mode de transfert sans fil par couplage électromagnétique avec un système de transmission intermédiaire 35 de l'appareil de préparation culinaire 1 compris dans la cuve 5.

Le module de transfert 33 est configuré pour crypter et décrypter les informations échangées avec le système de transmission intermédiaire 35. L'étiquette RFID 31 et l'au moins un capteur 29 sont raccordés au module de transfert 33.

Le système de transmission intermédiaire 35 comprend un module de communication complémentaire 37 configuré pour échanger des informations selon un protocole de communication sans fil avec le module de communication 23 et/ou un module annexe de communication 39 et/ou un réseau étendu de type Internet.

Le module annexe de communication 39 est compris dans un terminal portable 41 lui-même connecté à un réseau local sans fil ou un réseau de téléphonie sans fil.

Le système de transmission intermédiaire 35 comprend une batterie 43 apte à être rechargée en énergie par un système d'alimentation 45 du boîtier 3 lorsque la cuve 5 coopère avec le boîtier 3. Le système de transmission intermédiaire 35 est également agencé pour être alimenté directement par le système d'alimentation 45 lorsque la cuve 5 coopère avec le boîtier 3.

Le système de transmission intermédiaire 35 comprend également un module de transfert complémentaire 47 configuré pour transférer de l'énergie et échanger des informations avec le module de transfert 33.

Le module de transfert complémentaire 47 est pourvu d'un microcontrôleur 48 et d'un lecteur 50 configuré pour transcrire les informations échangées en données interprétables par le microcontrôleur 48.

Le système de transmission intermédiaire 35 peut également comprendre au moins un capteur additionnel 49 disposé sur ou ménagé dans la cuve 5. Il peut s'agir d'un capteur de poids 51, d'un capteur de pression interne 53 à la cuve 5, un capteur de température ou un capteur de présence 55 du couvercle 7 ou du verrouillage du couvercle 7, le verrouillage empêchant le passage de la position fermée à la position ouverte.

Il apparaît donc que l'insert constitué par le dispositif d'acquisition 21 permet de recueillir des valeurs de mesure au plus près des ingrédients compris dans la cuve 5. En couplage avec l'au moins un capteur additionnel 49, l'appareil de préparation culinaire 1 peut également déterminer si le mélange constitué par les ingrédients reçus dans la cuve 5 est homogène.

Comme illustré à la figure 4, un procédé de commande d'un appareil de préparation culinaire 1 comprend :
- une étape d'acquisition E1 d'au moins une valeur mesurée de l'au moins une grandeur physique par le dispositif d'acquisition 21,
- une étape de traitement E2 de l'au moins une valeur mesurée par l'unité de contrôle 19, le traitement correspondant à la comparaison de l'au moins une valeur mesurée à au moins une valeur cible connue de l'unité de contrôle 19 et la détermination d'un avancement d'accomplissement d'une séquence de fonctionnement de l'appareil de préparation culinaire 1,
- une étape d'adaptation E3 de la séquence de fonctionnement en fonction de l'avancement d'accomplissement.

L'adaptation de la séquence de fonctionnement correspond à un allongement ou un raccourcissement de la durée par défaut de la séquence de fonctionnement, à une augmentation ou une diminution d'une température de cuisson ou l'adaptation d'une vitesse de rotation de l'organe de travail ou de la cuve.

Au moins une valeur mesurée additionnelle provenant de l'au moins un capteur additionnel 49 peut être prise en compte lors de l'étape de traitement pour déterminer au mieux l'état du ou des aliments présents dans la cuve. L'appareil de préparation culinaire 1 peut ainsi contrôler au mieux l'évolution des ingrédients et déterminer avec précision quand une étape de préparation culinaire doit être considérée comme terminée. La réussite et la répétabilité des recettes en est ainsi améliorée.

Lorsque plusieurs organes de travail 11 comprenant chacun un dispositif d'acquisition 21 sont utilisés, il est ainsi aisé d'une part de s'assurer que l'organe de travail 11 monté convient à l'étape de préparation à réaliser et d'autre part que l'au moins une grandeur physique mesurée est pertinente pour la détermination de l'état des ingrédients.

Il a été ci-dessus décrit un mode de réalisation dans lequel la cuve 5 est fixe par rapport au boîtier 3 et l'organe de travail 11 est mobile. Il est également possible de concevoir d'autres modes de réalisation dans lesquels l'organe de travail 11 est fixe et la cuve 5 est mobile.

Dans ce cas de figure, le dispositif d'acquisition 21 est compris dans la cuve 5 et le système de transmission intermédiaire 35 est compris dans l'organe de travail 11 ou le boîtier 3 de l'appareil de préparation culinaire 1. Les moyens d'actionnement 15 sont bien entendu agencés pour mettre en mouvement la cuve 5.

Il apparaît donc que le dispositif d'acquisition 21 est un dispositif simple ne comprenant pas d'alimentation d'énergie intégré. Le dispositif d'acquisition 21 fonctionne en coopération avec un dispositif proche physiquement, le système de transmission intermédiaire, de manière à ce que l'au moins une grandeur physique soit mesurable par l'appareil de préparation culinaire 1.

Comme il va de soi, l'invention ne se limite pas à la seule forme d'exécution décrite ci-dessus à titre d'exemple, elle en embrasse au contraire toutes les variantes de réalisation tout en restant dans le cadre des revendications.

## Revendications

1. Appareil de préparation culinaire (1) comprenant :
- un boîtier (3),
- une cuve (5) configurée pour coopérer avec le boîtier (3) et agencée pour recevoir des aliments à préparer,
- un organe de travail (11) configuré pour coopérer avec la cuve (5) et agencé pour travailler les aliments reçus dans la cuve (5),
- des moyens d'actionnement (15) disposés dans le boîtier (3) et agencés pour mettre en mouvement l'organe de travail (11) relativement à la cuve (5) ou pour mettre en mouvement la cuve (5) relativement à l'organe de travail (11),
- des moyens de chauffage (17) agencés pour chauffer les aliments reçus dans la cuve (5),
- une unité de contrôle (19) dotée d'un processeur, l'unité de contrôle (19) étant configurée pour commander le fonctionnement des moyens d'actionnement (15) et des moyens de chauffage (17),
- **caractérisé en ce que** l'appareil comprend aussi en outre un dispositif d'acquisition (21) d'au moins une grandeur physique compris dans l'organe de travail (11) ou dans la cuve (5), le dispositif d'acquisition (21) étant compris dans l'organe de travail (11) lorsque l'organe de travail (11) est mobile et la cuve (5) est fixe relativement au boîtier (3), le dispositif d'acquisition (21) étant compris dans la cuve (5) lorsque la cuve (5) est mobile et l'organe de travail (11) est fixe relativement au boîtier (3), le dispositif d'acquisition (21) étant configuré pour échanger des informations avec un module de communication (23) de l'unité de contrôle (19).

2. Appareil de préparation culinaire (1) selon la revendication 1, dans lequel le dispositif d'acquisition (21) comprend un module de transfert (33) configuré pour recevoir de l'énergie selon un mode de transfert sans fil par couplage électromagnétique avec un système de transmission intermédiaire (35) de l'appareil de préparation culinaire (1).

3. Appareil de préparation culinaire (1) selon la revendication 2, dans lequel le système de transmission intermédiaire (35) est compris dans la cuve (5), dans un couvercle (7) de l'appareil de préparation culinaire (1) apte à coopérer avec la cuve (5) fixe, dans le boîtier (3) ou dans l'organe de travail (11) fixe, le système de transmission intermédiaire (35) comprenant un module de communication complémentaire (37) agencé pour échanger des informations selon un protocole de communication sans fil avec le module de communication (23) de l'unité de contrôle (19) et/ou avec un module annexe de communication (39) et/ou avec un réseau étendu.

4. Appareil de préparation culinaire (1) selon la revendication 3, dans lequel le système de transmission intermédiaire (35) comprend une batterie (43), la batterie (43) étant apte à être rechargée en énergie par un système d'alimentation (45) du boîtier (3), lorsque la cuve (5) ou l'organe de travail (11) coopère avec le boîtier (3) et que le système de transmission intermédiaire (35) est compris dans la cuve (5) fixe ou l'organe de travail (11) fixe.

5. Appareil de préparation culinaire (1) selon l'une des revendications 2 à 4, dans lequel le dispositif d'acquisition (21) comprend une étiquette RFID (31) raccordée au module de transfert (33).

6. Appareil de préparation culinaire (1) selon la revendication 5, dans lequel le dispositif d'acquisition (21) comprend au moins un capteur (29) agencé pour mesurer l'au moins une grandeur physique, l'au moins un capteur (29) étant raccordé à l'étiquette RFID (31).

7. Appareil de préparation culinaire (1) selon l'une des revendications 5 ou 6, dans lequel l'étiquette RFID (31) comprend en mémoire un identifiant relatif à l'organe de travail (11).

8. Appareil de préparation culinaire (1) selon l'une des revendications 5 à 7, dans lequel le système de transmission intermédiaire (35) comprend un module de transfert complémentaire (45) agencé pour transmettre de l'énergie et échanger des informations avec le module de transfert (33) du dispositif d'acquisition (21), le module de transfert complémentaire (45) comprenant en outre un microcontrôleur (48) et un lecteur (50) agencé pour convertir les informations échangées avec le dispositif d'acquisition (21) en données interprétables par le microcontrôleur (48).

9. Appareil de préparation culinaire (1) selon l'une des revendications 2 à 8, dans lequel le système de transmission intermédiaire (35) comprend au moins un capteur additionnel (49), l'au moins un capteur additionnel (49) étant disposé sur ou ménagé dans la cuve (5) fixe, le couvercle (7), le boîtier (3) ou l'organe de travail (11) fixe.

10. Appareil de préparation culinaire (1) selon l'une des revendications 8 à 9, dans lequel le module de transfert (33) et le module de transfert complémentaire (45) sont configurés pour crypter et pour décrypter les informations échangées, les informations échangées étant cryptées.

11. Appareil de préparation culinaire (1) selon l'une des revendications 1 à 10, comprenant un système d'éclairage (13) de la cuve (5) configuré pour éclairer les aliments reçus dans la cuve (5).

12. Appareil de préparation culinaire (1) selon la revendication 11, dans lequel le système d'éclairage (13) comprend un dispositif de modulation de l'intensité lumineuse et/ou de la couleur de la lumière.

13. Procédé de commande d'un appareil de préparation culinaire (1) selon l'une des revendications 1 à 12, comprenant :
- (E1) une étape d'acquisition d'au moins une valeur mesurée de l'au moins une grandeur physique par le dispositif d'acquisition (21),
- (E2) une étape de traitement de l'au moins une valeur mesurée par l'unité de contrôle (19), le traitement correspondant à la comparaison de l'au moins une valeur mesurée à au moins une valeur cible connue de l'unité de contrôle (19) et la détermination d'un avancement d'accomplissement d'une séquence de fonctionnement de l'appareil de préparation culinaire (1),
- (E3) une étape d'adaptation de la séquence de fonctionnement en fonction de l'avancement d'accomplissement.

## Patentansprüche

1. Kochzubereitungseinrichtung (1), umfassend:
- ein Gehäuse (3),
- einen Behälter (5), der ausgelegt ist, um mit dem Gehäuse (3) zusammenzuwirken und eingerichtet ist, um zuzubereitende Lebensmittel aufzunehmen,
- ein Arbeitselement (11), das ausgelegt ist, um mit dem Behälter (5) zusammenzuwirken und eingerichtet ist, um die im Behälter (5) aufgenommenen Lebensmittel zu verarbeiten,
- Betätigungsmittel (15), die im Gehäuse (3) angeordnet sind und eingerichtet sind, um das Arbeitselement (11) in Bezug auf den Behälter (5) in Bewegung zu versetzen oder um den Behälter (5) in Bezug auf das Arbeitselement (11) in Bewegung zu versetzen,
- Heizmittel (17), die eingerichtet sind, um die im Behälter (5) aufgenommenen Lebensmittel zu erhitzen,
- eine Steuereinheit (19), die mit einem Prozessor versehen ist, wobei die Steuereinheit (19) ausgelegt ist, um den Betrieb der Betätigungsmittel (15) und der Heizmittel (17) zu regeln,
- **dadurch gekennzeichnet, dass** die Einrichtung weiter auch eine Erfassungsvorrichtung (21) mindestens einer physikalischen Größe umfasst, die im Arbeitselement (11) oder im Behälter (5) umfasst ist, wobei die Erfassungsvorrichtung (21) im Arbeitselement (11) umfasst ist, wenn das Arbeitselement (11) beweglich ist und der Behälter (5) in Bezug auf das Gehäuse (3) festsitzend ist, wobei die Erfassungsvorrichtung (21) im Behälter (5) umfasst ist, wenn der Behälter (5) beweglich ist und das Arbeitselement (11) in Bezug auf das Gehäuse (3) festsitzend ist, wobei die Erfassungsvorrichtung (21) ausgelegt ist, um Informationen mit einem Kommunikationsmodul (23) der Steuereinheit (19) auszutauschen.

2. Kochzubereitungseinrichtung (1) nach Anspruch 1, wobei die Erfassungsvorrichtung (21) ein Übertragungsmodul (33) umfasst, das ausgelegt ist, um durch elektromagnetische Kopplung mit einem dazwischenliegenden Übertragungssystem (35) der Kochzubereitungseinrichtung (1) Energie gemäß einem Drahtlosübertragungsmodus zu empfangen.

3. Kochzubereitungseinrichtung (1) nach Anspruch 2, wobei das dazwischenliegende Übertragungssystem (35) im Behälter (5), in einem Deckel (7) der Kochzubereitungseinrichtung (1), der imstande ist, mit dem festsitzenden Behälter (5) zusammenzuwirken, im Gehäuse (3) oder im festsitzenden Arbeitselement (11) umfasst ist, wobei das dazwischenliegende Übertragungssystem (35) ein ergänzendes Kommunikationsmodul (37) umfasst, das eingerichtet ist, um Informationen gemäß einem Drahtloskommunikationsprotokoll mit dem Kommunikationsmodul (23) der Steuereinheit (19) und/oder mit einem zugehörigen Kommunikationsmodul (39) und/oder einem erweiterten Netzwerk auszutauschen.

4. Kochzubereitungseinrichtung (1) nach Anspruch 3, wobei das dazwischenliegende Übertragungssystem (35) eine Batterie (43) umfasst, wobei die Batterie (43) imstande ist, über ein Versorgungssystem (45) des Gehäuses (3) elektrisch wiederaufgeladen zu werden, wenn der Behälter (5) oder das Arbeitselement (11) mit dem Gehäuse (3) zusammenwirkt und wenn das dazwischenliegende Übertragungssystem (35) im festsitzenden Behälter (5) oder dem festsitzenden Arbeitselement (11) umfasst ist.

5. Kochzubereitungseinrichtung (1) nach einem der Ansprüche 2 bis 4, wobei die Erfassungsvorrichtung (21) ein RFID-Tag (31) umfasst, das am Übertragungsmodul (33) angeschlossen ist.

6. Kochzubereitungseinrichtung (1) nach Anspruch 5, wobei die Erfassungsvorrichtung (21) mindestens einen Sensor (29) umfasst, der eingerichtet ist, um die mindestens eine physikalische Größe zu messen, wobei der mindestens eine Sensor (29) am RFID-Tag (31) angeschlossen ist.

7. Kochzubereitungseinrichtung (1) nach einem der Ansprüche 5 oder 6, wobei das RFID-Tag (31) eine Kennung im Speicher in Bezug auf das Arbeitselement (11) umfasst.

8. Kochzubereitungseinrichtung (1) nach einem der Ansprüche 5 bis 7, wobei das dazwischenliegende Übertragungssystem (35) ein ergänzendes Übertragungsmodul (45) umfasst, das eingerichtet ist, um Energie zu übertragen und Informationen mit dem Übertragungsmodul (33) der Erfassungsvorrichtung (21) auszutauschen, wobei das ergänzende Übertragungsmodul (45) weiter einen Mikrocontroller (48) und ein Lesegerät (50) umfasst, das eingerichtet ist, um die mit der Erfassungsvorrichtung (21) ausgetauschten Informationen in Daten umzuwandeln, die von dem Mikrocontroller (48) ausgelegt werden können.

9. Kochzubereitungseinrichtung (1) nach einem der Ansprüche 2 bis 8, wobei das dazwischenliegende Übertragungssystem (35) mindestens einen zusätzlichen Sensor (49) umfasst, wobei der mindestens eine zusätzliche Sensor (49) auf dem festsitzenden Behälter (5), dem Deckel (7), dem Gehäuse (3) oder dem festsitzenden Arbeitselement (11) angeordnet oder darin eingerichtet ist.

10. Kochzubereitungseinrichtung (1) nach einem der Ansprüche 8 bis 9, wobei das Übertragungsmodul (33) und das ergänzende Übertragungsmodul (45) ausgelegt sind, um die ausgetauschten Informationen zu verschlüsseln und zu entschlüsseln, wobei die ausgetauschten Informationen verschlüsselt sind.

11. Kochzubereitungseinrichtung (1) nach einem der Ansprüche 1 bis 10, umfassend ein Beleuchtungssystem (13) des Behälters (5), das ausgelegt ist, um die im Behälter (5) aufgenommenen Lebensmittel zu beleuchten.

12. Kochzubereitungseinrichtung (1) nach Anspruch 11, wobei das Beleuchtungssystem (13) eine Vorrichtung zur Modulation der Leuchtkraft und/oder der Lichtfarbe umfasst.

13. Verfahren zur Regelung einer Kochzubereitungseinrichtung (1) nach einem der Ansprüche 1 bis 12, umfassend:
- (E1) einen Schritt der Erfassung mindestens eines gemessenen Werts der mindestens einen physikalischen Größe durch die Erfassungsvorrichtung (21),
- (E2) einen Schritt der Behandlung des mindestens einen gemessenen Werts durch die Steuereinheit (19), wobei die Behandlung einem Vergleich des mindestens einen gemessenen Werts mit mindestens einem bekannten Zielwert der Steuereinheit (19) und der Bestimmung eines Fortschreitens der Vollziehung einer Betriebsabfolge der Kochzubereitungseinrichtung (1) entspricht,
- (E3) einen Schritt der Anpassung der Betriebsabfolge in Abhängigkeit von dem Fortschreiten der Vollziehung.

## Claims

1. Culinary preparation appliance (1) comprising:
- a housing (3),
- a bowl (5) configured to engage with the housing (3) and arranged to receive food to be prepared,
- a working member (11) configured to engage with the bowl (5) and arranged to work the food received in the bowl (5),
- actuating means (15) provided in the housing (3) and arranged to set the working member (11) in motion relative to the bowl (5) or to set the bowl (5) in motion relative to the working member (11),
- heating means (17) arranged to heat the food received in the bowl (5),
- a control unit (19) equipped with a processor, the control unit (19) being configured to control the operation of the actuating means (15) and of the heating means (17),
- **characterised in that** the appliance also further comprises a device for acquiring (21) at least one physical quantity included in the working member (11) or in the bowl (5), the acquisition device (21) being included in the working member (11) when the working member (11) is mobile and the bowl (5) is fixed relative to the housing (3), the acquisition device (21) being included in the bowl (5) when the bowl (5) is mobile and the working member (11) is fixed relative to the housing (3), the acquisition device (21) being designed to exchange information with a communication module (23) of the control unit (19).

2. Culinary preparation appliance (1) according to claim 1, wherein the acquisition device (21) comprises a transfer module (33) designed to receive energy according to a method of wireless transfer via electromagnetic coupling with an intermediate transmission system (35) of the culinary preparation appliance (1).

3. Culinary preparation appliance (1) according to claim 2, wherein the intermediate transmission system (35) is included in the bowl (5), in a lid (7) of the culinary preparation appliance (1) able to engage with the fixed bowl (5), in the housing (3) or in the fixed working member (11), the intermediate transmission system (35) comprising an additional communication module (37) arranged to exchange information according to a wireless communication protocol with the communication module (23) of the control unit (19) and/or with an annex communication module (39) and/or with an extended network.

4. Culinary preparation appliance (1) according to claim 3, wherein the intermediate transmission system (35) comprises a battery (43), the battery (43) able to be recharged with energy by a power supply system (45) of the housing (3), when the bowl (5) or the working member (11) engaged with the housing (3) and the intermediate transmission system (35) is included in the fixed bowl (5) or the fixed working member (11).

5. Culinary preparation appliance (1) according to one of claims 2 to 4, wherein the acquisition device (21) comprises an RFID tag (31) connected to the transfer module (33).

6. Culinary preparation appliance (1) according to claim 5, wherein the acquisition device (21) comprises at least one sensor (29) arranged to measure the at least one physical quantity, the at least one sensor (29) being connected to the RFID tag (31).

7. Culinary preparation appliance (1) according to one of claims 5 or 6, wherein the RFID tag (31) comprises in memory an identifier relative to the working member (11).

8. Culinary preparation appliance (1) according to one of claims 5 to 7, wherein the intermediate transmission system (35) comprises an additional transfer module (45) arranged to transmit energy and exchange information with the transfer module (33) of the acquisition device (21), the additional transfer module (45) further comprising a microcontroller (48) and a reader (50) arranged to convert the information exchanged with the acquisition device (21) into data that can be interpreted by the microcontroller (48).

9. Culinary preparation appliance (1) according to one of claims 2 to 8, wherein the intermediate transmission system (35) comprises at least one additional sensor (49), the at least one additional sensor (49) being arranged on or arranged in the fixed bowl (5), the lid (7), the housing (3) or the fixed working member (11).

10. Culinary preparation appliance (1) according to one of claims 8 to 9, wherein the transfer module (33) and the additional transfer module (45) are designed to encrypt and to decrypt the information exchanged, with the information exchanged being encrypted.

11. Culinary preparation appliance (1) according to one of claims 1 to 10, comprising a lighting system (13) of the bowl (5) designed to light the food received in the bowl (5).

12. Culinary preparation appliance (1) according to claim 11, wherein the lighting system (13) comprises a device for modulating the light intensity and/or the colour of the light.

13. Method for controlling a culinary preparation appliance (1) according to one of claims 1 to 12, comprising:
- (E1) a step of acquiring at least one measured value of the at least one physical quantity by the acquisition device (21),
- (E2) a step of processing the at least one value measured by the control unit (19), the processing corresponding to comparing the at least one value measured with the at least one target value known by the control unit (19) and determining a progress of the accomplishing of an operating sequence of the culinary preparation appliance (1),
- (E3) a step of adapting the operating sequence according to the progress of the accomplishing.
